# EUROPEAN PATENT APPLICATION

(11) **EP 1 255 222 A2**
(43) Date of publication of application: **06.11.2002**
(21) Application number: 02252630.5
(22) Date of filing: 12.04.2002
(51) Int. Cl.: G06K 17/00

(54) **Method and apparatus for document processing**

(30) Priority: 02.05.2001 US 848005
(71) Applicant: NCR International, Inc., Dayton, Ohio 45479 (US)
(72) Inventor: Cosentino, Joseph, Hamilton, Ontario N2T 2G4 (CA)
(74) Representative: Williamson, Brian

(57) **Abstract**

Techniques for remote control of item transports used in financial document processing are described. An operator uses a handheld control unit to establish a communication session with a transport. The transport sends status and error messages to the control unit, and the operator uses the control unit to issue commands to the transport. The transport is able to notify the operator of exceptions and other conditions, and the operator is able to exercise full control over the transport, without a need for the operator to go to a central console in order to obtain information and issue commands.

## Description

The present invention relates generally to improvements to financial document transport and processing systems and methods. More particularly, the invention relates to a document processing system employing a preferably handheld wireless remote unit which can be used by an operator to receive messages from and transmit commands to components of the processing system.

An item transport, used in financial document processing systems to receive, process and sort documents, typically comprises an input section in which a batch of documents is placed for processing, a transport path for transporting the documents through various processing steps, a sorting area where the documents are sorted into different pockets after processing, and display and input sections where an operator is able to read displayed messages and enter information and commands. An operator is frequently called on to perform tasks at different areas of the transport. A typical item transport is quite large and requires an operator to walk a moderate distance to get from one side or end of the machine to the other. For example, an operator may be working at the sorting area of the transport when a problem occurs, causing the transport to interrupt processing and display an error message. The operator must then typically walk to the display area, read the error message and then proceed back to the sorting area or to another identified area in order to correct the problem. An operator is similarly required to walk to the display area to read informational messages and if, as is usual, a keyboard or other input device is placed at the display area, the operator must also walk to the display area in order to enter commands into the item transport. The need for the operator to walk back and forth along the transport to receive messages at a display area, go to another area of the transport to perform tasks related to the messages and return to the display area to receive further messages or enter commands interferes with operator efficiency.

There exists, therefore, a need for a way for an operator of a document processing system to receive messages and enter commands without a need to move to a special display area of the system in order to receive the messages and enter the commands.

The present invention recognizes that it would be advantageous to allow an operator to be able to receive messages and enter commands wherever he or she happened to be with respect to the transport, using approaches which do not interfere with the operator's freedom of movement. The present invention further recognizes the advantages of allowing the operator to remotely receive messages having the same content and detail as would be received at the display area of the transport and to remotely transmit operator commands providing the same control as would be possible by using the keyboard or other operator input device which are part of the transport controller. The operator is thus able to exercise as much control over the transport operations as would be possible if he or she were standing at the display and control area, but may exercise this control from any area in which he or she needs to be to perform other functions, such as removing documents from pockets, clearing jams and the like.

To this end, a document processing system according to the present invention preferably comprises an item transport controlled by a transport controller which may suitably be a personal computer (PC). The transport controller communicates with a user interface for displaying operator messages and receiving operator inputs. The user interface preferably comprises a keyboard for accepting operator inputs and a monitor for displaying messages. Multiple transports may operate in the same vicinity, with each transport typically being attended by a single operator. Each transport controller communicates with a transmitter interface for sending messages to and receiving commands from a wireless control unit which may be carried by its operator. Each transport may have its own transmitter interface. Alternatively, a plurality of transports may share a single transmitter interface, through a connection such as a local area network. Each transport has its own unique identifier which is used by the transport controller to identify the transport to one or more control units. The use of an identifier by each transport controller allows control units to operate using a single frequency and within radio range of one another, without having the operation of one control unit interfere with the operation of the other control units.

Each of the control units preferably includes sufficient memory and a sophisticated user interface to allow for the display of detailed messages and the construction and sending of detailed commands. The messages displayed by each control unit are preferably similar or identical to the messages which can be displayed at the monitor belonging to the corresponding transport. The commands which can be sent using the control units are preferably similar or identical to the commands which can be sent using the keyboard belonging to the corresponding transport.

During operation, a transport typically displays messages to provide information on transport operation and to notify the operator when a problem occurs requiring operator intervention. The transport controller preferably displays each message using a local monitor and accepts commands entered using a local keyboard. The transport controller does not communicate with a wireless control unit at all times, but instead an operator can establish and break communication between a transport and a control unit as needed. When no control unit is communicating with the transport controller, the transport controller uses the transmitter interface to broadcast a message advising of the availability of the transport. The message includes the identifier of the transport and causes all disengaged control units within range to display a notice that the transport is available. A plurality of transports may each broadcast a notice of availability. When this occurs, all disengaged control units display a list of all available transports. In addition, any transport which is engaged in a session with a control unit but which is available to conduct an additional session with a different control unit also broadcasts a notice of availability. For example, it may be desirable to allow a new operator coming on duty to establish a session with a transport which is already engaged in a session with a current operator whom the new operator will be relieving. By broadcasting the notice of availability, the engaged transport signals its availability to engage in an additional session, and allows the new operator to engage in a session. The transport can thus establish the new session without ever being disengaged from at least one control unit, avoiding a need to shut down a transport to change operators or the risk of uncontrolled operation if the transport is not shut down.

When an operator wishes to communicate with a transport, he or she selects the desired transport from a displayed list and logs in to the transport, providing an operator identification or other authenticating information. The transport controller then creates a session identifier and the transport controller and the control unit both use the session identifier to identify their communications. Once a session has been established, the transport controller transmits the status message which was most recently displayed using the local monitor to the control unit for display by the control unit. In this way, the control unit furnishes the operator with the same information concerning the current status of the transport as is available from the local monitor. Subsequently, each message which is displayed using the local monitor is also displayed using the control unit, modified as needed to be compatible with the control unit hardware. Commands can be entered using the keyboard or other local input device, or using the control unit. When an operator wishes to disengage the control unit, he or she enters a command to terminate the session. The transport controller then closes the session and broadcasts an availability message to allow for subsequent connection by a control unit, if the transport is not already broadcasting an availability message or engaged in a session.

According to a first aspect of the present invention there is provided a document processing system, comprising: a document transport; a transport controller for directing the operation of the document transport, the transport controller being operative to sense exceptions and to generate operator messages in response to the exceptions; a transmitter interface for receiving operator messages from the transport controller and wirelessly transmitting the messages; and an operator control unit for wirelessly receiving operator messages from the transmitter interface and visually displaying the messages for an operator, the control unit being operative to receive operator commands and transmit the operator commands to the transport.

According to a second aspect of the present invention there is provided a method of document transport control comprising the steps of: establishing a communication session between the transport and a handheld operator control unit; transmitting status messages from the transport to the control unit; and transmitting commands from the control unit to the transport.

An embodiment of the present invention will now be described, by way of example, with reference to the accompanying drawings, in which:
Fig. 1 illustrates a document processing system in accordance with the present invention;
Fig. 2 illustrates functional details of a document processing system in accordance with the present invention;
Fig. 3 illustrates a document processing system including multiple item transports in accordance with the present invention;
Fig. 4 illustrates functional details of a transport controller in accordance with the present invention;
Fig. 5 illustrates a portable control unit in accordance with the present invention;
Fig. 6 illustrates additional details of a portable control unit in accordance with the present invention; and
Fig. 7 illustrates a process of transport control in accordance with the present invention.

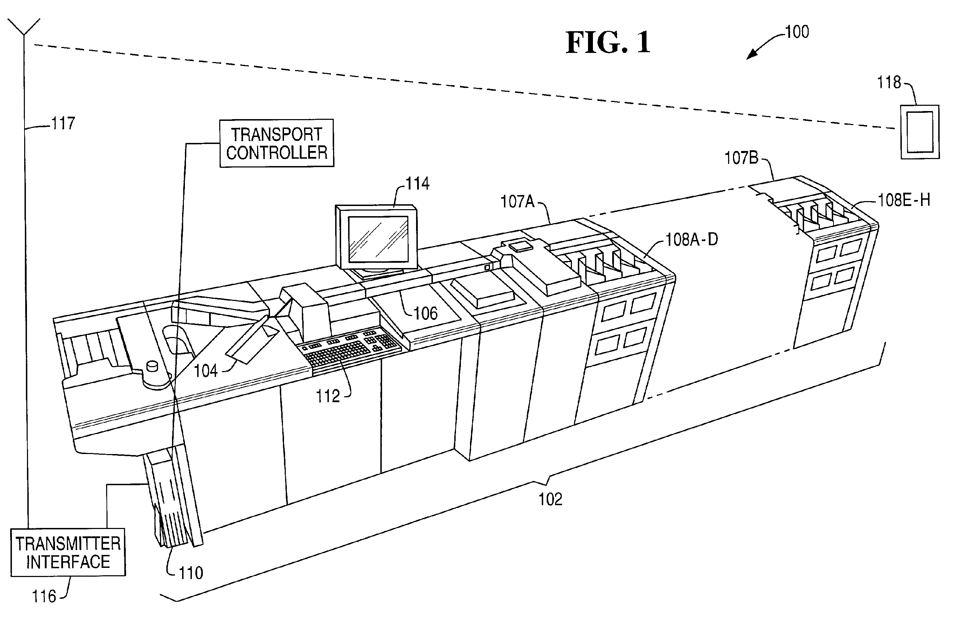

Fig. 1 illustrates a document processing system 100 in accordance with the present invention. The system 100 includes an item processing transport 102 for processing and sorting documents. The transport 102 includes a hopper 104, a transport path 106 and sorting pocket modules 107A and 107B. The sorting pocket module 107A includes sorting pockets 108A-108D and the sorting pocket module 107B includes sorting pockets 108D-108H. The sorting pocket modules 107A and 107B are physically distinct units of machinery, each containing four pockets, but in document processing operations the pockets 108A-108H are grouped according to the needs of the processing operation being performed. For example, a particular operation may use the pockets 108A-108D as a set of pockets for grouping of documents, while another operation at a later stage of processing may use the set of pockets 108A-108B, while still another operation uses the pockets 108A-108H. It will be recognized that the number of sorting pocket modules which may be used is not limited to the two represented by the modules 107A and 107B. Instead, the transport 102 may include as many sorting pocket modules as are needed. Many item transports have 12 or more sorting pocket modules, each module having four pockets, for a total of 48 or more pockets. In such a case, the number of sorting pocket modules add substantially to the length of the transport 102, increasing the time required for an operator to walk between distant areas of the transport 102.

The transport 102 is controlled by a transport controller 110 which may suitably be a personal computer (PC) which controls the operation of the transport 102 and which receives inputs from an operator through a keyboard 112 and displays operator messages through a monitor 114. The transport 102 also includes a transmitter interface 116 communicating with the transport controller 110, receiving operator messages from the transport controller 110 and transmitting the messages through an antenna 117 to an operator control unit 118 carried by an operator. The transmitter interface 116 preferably communicates with the operator control unit 118 using omnidirectional radio frequency (RF) communication. The operator control unit 118 may be one of a number of similar control units, and the transport 102 may be one of a number of similar transports, all operating in relatively close physical proximity, for example in a single large room. The transport controller 110 establishes communication with the control unit 118 by first broadcasting an availability message, causing the control unit 118 to display a message giving notice that the control unit 102 is available. Other available transports, that is, transports not engaged in communication with a control unit, or which are engaged in communication with a control unit but are available to communicate in additional sessions with different control units, will broadcast a similar message, each message including a unique identifier, so that an available control unit will receive a message listing all the transports which are available and allowing the operator to choose a desired transport.

When the operator uses the control unit 118 to select the transport 102, the operator logs in to the transport 102 by providing appropriate authenticating information. The transport controller 110 then opens a session and sends a session identifier to the control unit 118. The control unit 118 and the transport controller 110 use the session identifier to identify their subsequent communications. Upon opening a session, the transport controller 110 transmits the last displayed message to the control unit 118. As operation of the transport 102 proceeds, the transport controller 110 then displays appropriate messages using the monitor 114. The transmitter interface 116 is used to transmit equivalent messages to the control unit 118. Each message transmitted to the control unit 118 is appropriately formatted for display using the hardware of the control unit 118, and therefore may be different in format or appearance from equivalent messages displayed using the monitor 114.

Frequently, exceptions and problems, such as document jams, occur in the area of the pockets such as the pockets 108A-108H, and transmitting messages to the operator control unit 118 saves the operator from walking to the monitor to receive an error message and then returning to the area of the pockets 108A-108H to deal with the problem. In addition, the transport controller 110 may issue status reports and other information which are useful for the operator, but which reflect conditions that do not cause shutdown of the transport. Transmitting status reports to the operator control unit 118 relieves the operator of the need to walk to the monitor to receive the reports, and makes it more likely that the operator will see the reports, because there will be no need for the operator to interrupt his or her work in order to walk to the monitor to receive a report which may be useful but which is not so critical as to cause shutdown of the transport.

During a session, the operator also advantageously uses the control unit 118 to transmit commands to the transport controller 110. For example, the operator may use the control unit 118 to issue a command to restart the transport after an exception has been cleared. The operator may also use the control unit 118 to issue commands and provide other inputs at any time such commands or input could be provided using the keyboard 112. For example, the operator may use the control unit 118 to instruct the transport controller 110 to suspend or shut down operation of the transport. The operator's productivity is enhanced because the use of the control unit 118 saves the operator from walking to the display area to issue commands.

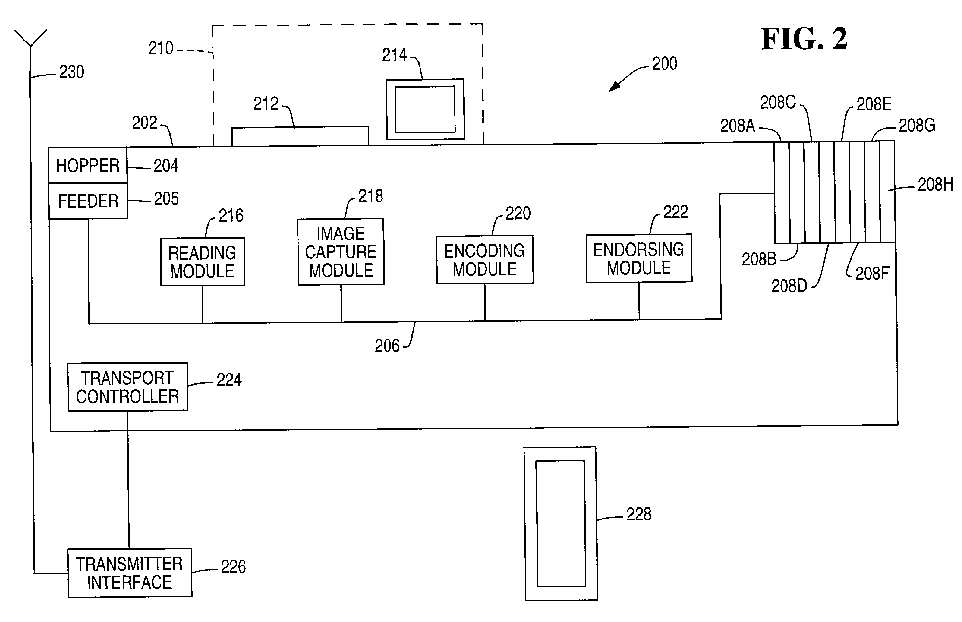

Fig. 2 is a detailed functional view of a document processing system 200 in accordance with the present invention. The document processing system 200 includes an item processing transport 202 including a document hopper 204, document feeder 205, transport path 206 and sorting pockets 208A-H. The sorting pockets 208A-208H are shown here by way of example, and are discussed here as part of a single operational group, but it will be recognized that the transport 202 may include more or fewer pockets and that operational groupings of pockets will be determined by the needs of the processing operation being undertaken.

The transport 202 also includes an operator interface 210 including a keyboard 212 and monitor 214. The operator interface 210 may be used for entering data to be entered on a document, such as the amount of the document, and is also used to receive information about the status of the transport 202 and to enter commands directing operation of the transport 202. The transport 202 also includes a reading module 216, an image capture module 218, an encoding module 220 and an endorsing module 222. While the reading module 216, image capture module 218, encoding module 220 and endorsing module 222 are shown here by way of example, it is also possible for a transport such as the transport 202 to include additional modules, for example an ultraviolet snippet module for use in detecting security features appearing in ultraviolet ink, an endorsement capture module, a microverifier module, a microfilmer module, or any of a number of additional optional modules.

Operation of the transport 202 is controlled by a transport controller 224 which displays operator messages using the monitor 214 and receives operator inputs from the keyboard 212. The transport controller 224 also directs the operation of the document feeder 205, transport path 206, sorting pocket modules 208A-H and the modules 216, 218, 220 and 222. It also receives and processes data generated through the processing of documents. The transport controller 224 also communicates with a transmitter interface 226 in order to convey operator messages to an operator control unit 228 which receives operator messages transmitted via an antenna 230 connected to the transmitter interface 226. The transmitter interface 226 also receives operator messages and commands transmitted by an operator using the operator control unit 228. During most of its operating time, an item processing transport such as the transport 202 requires only a single operator, so that the transport controller 224 usually communicates with only one operator control unit 228, typically by establishing a communication session between the transport controller 224 and the control unit 228 and identifying the session in communications between the transport controller 224 and the control unit 228. In cases in which the transport 202 communicates with more than one operator control unit at a time, communications with each operator control unit are identified with a session identifier. By identifying messages as belonging to a session, it is possible for the transport 202 to operate within radio range of other similar transports, each communicating in its own session with an operator display unit, without misrouting of messages or other interference.

Many transports such as the transport 202 require little or no data entry via the keyboard 212. Instead, the necessary data is obtained from each document through image analysis. In such a case, the primary function of the operator is to correct problems in the operation of the transport. Because the transport 202 moves and sorts paper documents, the documents are subject to jams, misroutings and other problems which may cause the transport 202 to shut down until they can be corrected. Most problems occur in the vicinity of the sorting pockets 208A-H and an operator can be most productive by spending the bulk of his or her time in that area, walking to an appropriate one of the sorting pockets 208A-H when needed and correcting problems affecting that module. When the transport 202 experiences a problem, the affected module sends a message to the transport controller 224, which suspends operation of the transport 102, displays a message on the monitor 214 and uses the transmitter interface 226 to send an operator message to the operator control unit 228. The message displayed on the operator control unit 228 is preferably similar or identical to the message displayed on the monitor 214, and allows the operator the same options as are presented by the message displayed on the monitor 214. The operator proceeds to the indicated area of the transport 202 and corrects the problem. The operator then enters a command to the transport using the operator control unit 228. Depending on the design of the operator control unit 228, this may be done by pressing a real button or a button display on the control unit 228. If a command is to be entered by pressing a button display, the operator control unit 228 presents the message to the operator and displays images of one or more buttons on a touch sensitive screen. When the operator presses an appropriate location on the screen, the pressing of the location is interpreted as a button press similar to pressing of a button or key on the keyboard 212, or clicking a button image on the monitor 214. The operator control unit 228 then transmits a command to the transport controller 224 to execute the command represented by the button image. Alternatively, the operator control unit 228 may be adapted to receive text commands entered by an operator using a keyboard display or a handwriting recognition mechanism. Text commands sent using the operator control unit 228 are treated in a similar fashion to text commands entered through the keyboard 212. As an alternative to entering a command using the operator display unit 228, the operator may also alternatively press a pocket button or press an "Enter" key or another predetermined key on the keyboard 212 in order to resume operation.

The document processing system 200 provides significant savings of time and effort over prior art systems, which require the operator to walk to a display in order to read a message describing a transport condition or problem and then walk back to the pocket area if, as is likely, the message describes a problem affecting one of the pockets. The operator control unit 228 may suitably provide the same information as would be received from the monitor 214 and allow entry of the same commands as would be entered using the keyboard 212. Allowing the operator such complete information and control without a need to walk back and forth between the information display and the area where the problem exists can significantly increase the productivity of the operator.

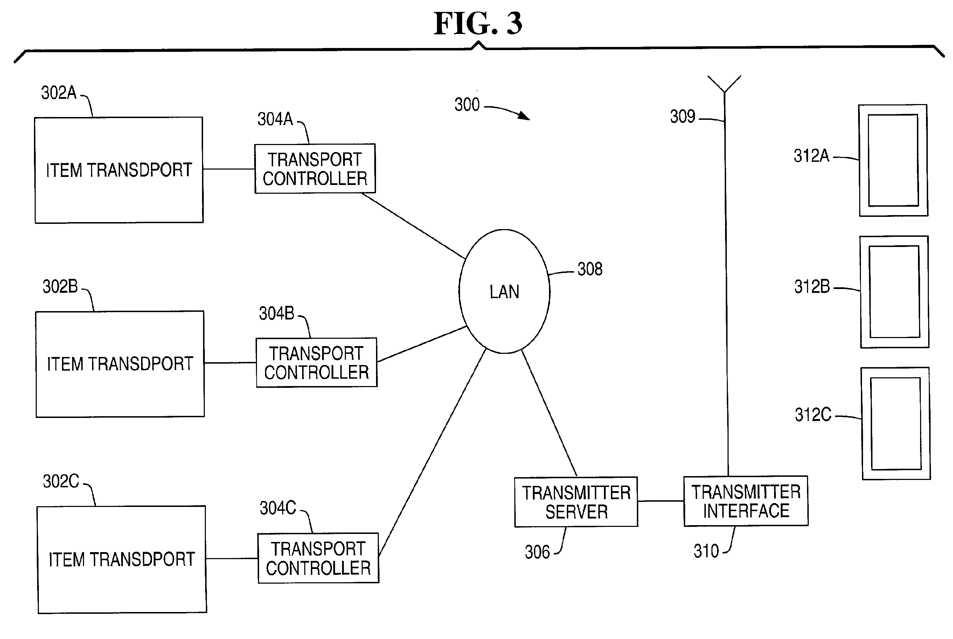

If desired, a plurality of transports may share a single transmitter interface. Fig. 3 illustrates a document processing system 300 including transports 302A-302C, controlled by transport controllers 304A-304C, respectively. Each of the transport controllers 304A-304C is connected to a transmitter server 306 by a local area network 308. It will be recognized that the transmitter server 306 need not be exclusively dedicated to transmitting, but may be a multifunction server. The transmitter server 306 is in turn connected to a transmitter interface 310 and controls the operation of the transmitter interface 310 in response to commands from the transport controllers 304A-304C. The server 306 also transfers data from the transmitter interface 310 to the transport controllers 304A-304C. Each of the transports 302A-302C may suitably establish a session with the operator control units 312A-312C. Each of the transport controllers 304A-304C sends messages to the transmitter server 306. If a message is an availability message, it includes an identifier for the transport, and if the message is part of a communication session with a control unit, it includes an appropriate session identifier. The transmitter server 306 formats each message for transmission and broadcasts it using the transmitter interface 310. Each of the control units 312A-312C displays availability messages, if disengaged, or, if engaged in a session, responds to messages including the appropriate session identifier.

When an exception occurs, for example affecting the transport 302A, while the transport is engaged in a session with the control unit 312A, the transport controller 304A prepares an operator message including the session identifier being used by the transport controller 304A and the control unit 312A. The transport controller 304A then passes the message to the transmitter server 306, which sends the message using the transmitter interface 308 and antenna 309. Because the message is identified as belonging to the session going on between transport controller 304A and the operator control unit 312A, the operator control units 312B and 312C will not be affected. A plurality of transports such as the transports 302A-302C are able to operate within radio range of one another and are able to share a transmitter interface, each transport being able to communicate in a session with an operator control unit without interfering with the operation of operator control units in sessions with the other transports.

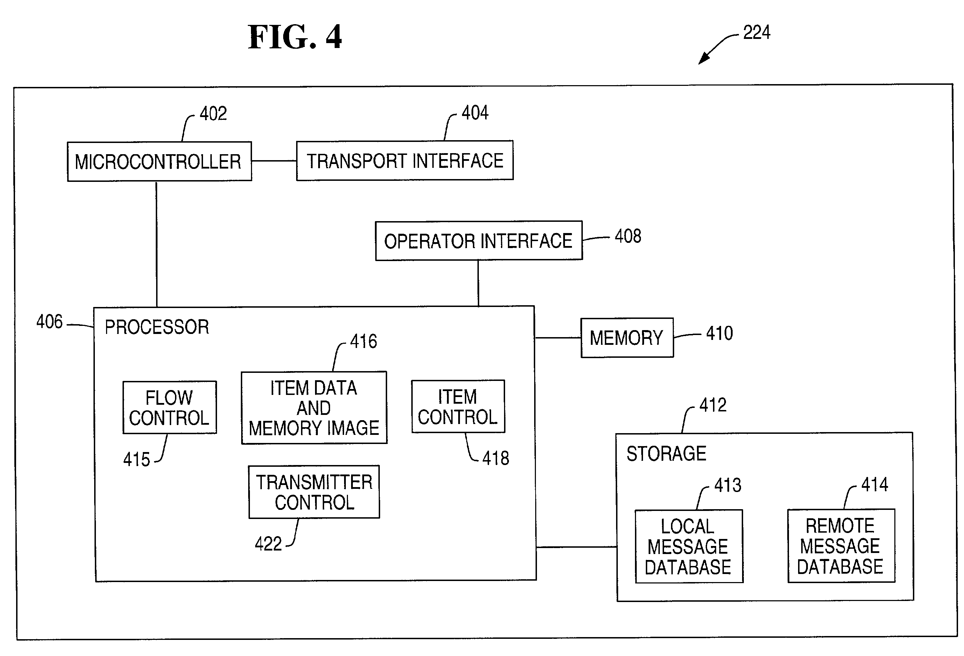

Fig. 4 provides a functional illustration of a transport controller which may be employed as the transport controller 224. The transport controller 224 includes a microcontroller 402 connected to a transport interface 404 and a processor 406, and an operator interface 408 connected to the processor 406. The operator interface 408 provides communication with a keyboard and monitor, such as the keyboard 212 and monitor 214 of Fig. 2, as well as a mouse or other suitable user interface devices as desired. The operator interface 408 also provides communication with operator control units such as the control unit 228, using the transmitter server 226. The transport controller further includes memory 410 and storage 412. A local message database 413 preferably resides on the storage 412. The local message database 413 may suitably include a set of all possible operator messages which may be produced by the transport. Alternatively, the local message database 413 may include elements from which messages may be constructed. For example, the local message database 413 may include a set of message templates, with one message template associated with each condition or event which may be described in a message, along with data to be inserted in appropriate locations in the required message template in order to describe the condition and the transport element affected by the condition. With this implementation of the database 413, an operator message can be constructed for a particular condition affecting a particular transport element by retrieving the message template and the transport element description and constructing a message describing the error and the affected transport element. For example, the database 413 may include templates such as "paper jam in _near_", "pocket_is full," "encoding ink low", and the like. The data stored for insertion in the templates may include , "transport path", "image capture module", "36" (for pocket 36), "in encoding module", and the like. Thus, an operator message may be constructed by retrieving the appropriate template and data in order to form the message "Paper jam in transport path near image capture module," or "Pocket 36 is full", for example.

The local message database 413 preferably includes data to allow for the construction of all possible messages, including status reports, error messages, advisory information or any other information which may need to be provided by the transport during operation. In addition, the transport controller 224 includes a remote message database 414 containing data to be used to construct messages for transmission to an operator control unit such as the unit 228. The remote message database 414 includes data similar to that contained in the local message database, with format alterations to adapt the messages to the display capabilities of the control unit 228. For example, the remote message database 414 may include a message corresponding to each message in the local message database 413. Alternatively, if the local message database 413 includes message templates and data, the remote message database 414 preferably includes corresponding message templates and data.

The processor 406 implements various functions used to control the transport operation and operator communication. The functions include a flow control function 415 for control of information and commands used by the transport controller, and an item data and memory image function 416 for reading and processing encoded item information as well as for capturing and storing item images. An item control function 418 is also implemented for directing transport of the items to be processed. When a function such as the item data and memory image function or the transport function needs to send an operator message, the affected function notifies the operator interface function 408. The operator interface function 408 retrieves the required data from the local message database 413 and constructs an appropriate operator message based on the information received from the affected function. The operator interface function 408 displays the error message locally. The operator interface function 408 then retrieves corresponding data from the remote message database 414 and constructs a message to be displayed remotely using an operator control unit. The operator interface function 408 then provides the message to a transmitter control function 422, which adds the session identification of a control unit such as the unit 228 engaged in a communication session with the transport controller 224, and formats the message and address into a message transmission to be broadcast to the operator control units. The transmitter control function 422 then sends the message transmission to a transmitter interface such as the transmitter interface 226.

If the condition requiring sending of a message is an exception or other such condition requiring suspension of transport operation, the affected function notifies the flow control function 415 before notifying the operator interface function 408. The flow control function directs the item control function to suspend processing of items, while the operator interface function 406 prepares and directs transmission of the message.

When the transport controller 224 receives an operator command, either from the transmitter 226 for commands received from an operator control unit, or from a local keyboard such as the keyboard 212, the operator interface function 408 processes the command and relays it to the appropriate function, for example, the flow control function 415 for a command to restart the transport after suspension of operation.

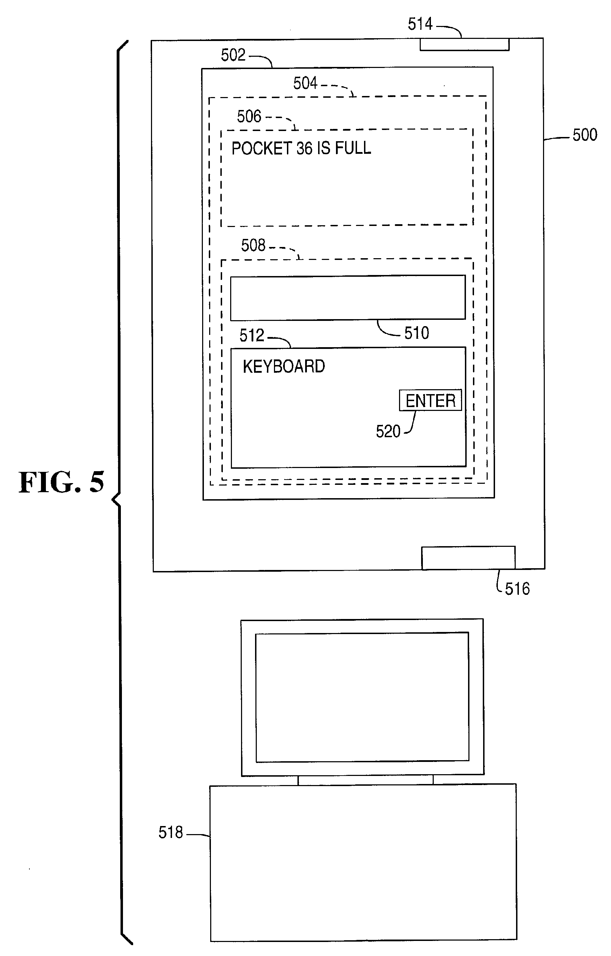

Fig. 5 illustrates a front view of an operator control unit 500 in accordance with the present invention. The control unit 500 includes an LCD display screen 502 which is preferably a touch sensitive screen, shown here as displaying an operator interface 504. The operator interface is shown here as comprising a message display area 506 and a command interface area 508. The message display area 506 is shown here as displaying the message "Pocket 36 is full" and the command interface area 508 is shown here as including a text entry area 510 and a keyboard display 512. The text entry area 510 and the keyboard display 512 allow the operator to type in a desired command and to see the command as it is typed. The control unit 500 also includes an infrared port 514, as well as an external port 516, for transferring programs and data between the control unit 500 and an external computer 518. The control unit 500 and the external computer 518 are not shown to scale in Fig. 5, but the control unit 500 is shown larger in order to provide a clearer illustration. The external computer 518 may be a standalone computer not used in the operation of a transport, but simply used to transfer programs and data to be used by the control unit 500 or to receive data transferred from the control unit 500. A transport controller such as the transport controller 224 may be used as the external computer, but in this case, data transfer between the external computer and the control unit 500 is preferably conducted while the transport is not operating, so that the transfer of data to and from the control unit 500 will not interfere with operation of the transport.

The control unit 500 can be used to establish a communication session with a transport and then to control all aspects of transport operation during the session, including, for example, displaying all error messages and status messages generated by the transport, restarting operation of the transport in response to an operator command after the operator has cleared an error condition, or shutdown of the transport. For illustrative purposes, the exemplary control unit 500 is shown here as displaying an error message typical of the sort of message generated after a transport has suspended operation.

Once the control unit 500 receives the message illustrated here, the operator may clear pocket 36 on the transport and then press the "Enter" key display 520 on the keyboard display 512 in order to direct the transport to resume operation. In the particular instance shown, the transport controller 224 is programmed to restart the transport after an error condition is cleared and the "Enter" key is pressed on either the keyboard 212 or the control unit 500, so there is no need for the operator to type a specific command. This design simplifies operation of the transport by allowing the operator to restart the transport with a single keypress upon clearing an error condition. However, the operator can use the control unit 500 to issue other commands as needed by typing in the command and pressing the "Enter" key 520. For example, the operator can suspend operation of the transport, even when no error condition exists, by typing "Pause" and pressing the "Enter" key 520. Any message which can be displayed on the monitor 214 is preferably simultaneously displayed on the message area 506 and any command which can be entered using the keyboard 212 may also be entered using the command interface 508.

Although a keyboard display 512 is shown here by way of example, alternative displays may be presented in the command interface 508. For example, the command interface 508 may display a set of pushbutton images which may be pressed in order to transmit commands to the transport.

Although an exemplary operator message area 506 and command interface 508 are illustrated here, it will be recognized that it is not necessary for the operator interface 504 to display an operator message area such as the area 506 and a command interface such as the command interface 508 at the same time. Sequential screens which may include operator message areas or command interface areas may be displayed upon command from the transport or in response to a selection by the operator. Other types of displays providing operator information and requesting responses from the operator may also be displayed as required by the context of the transport operation.

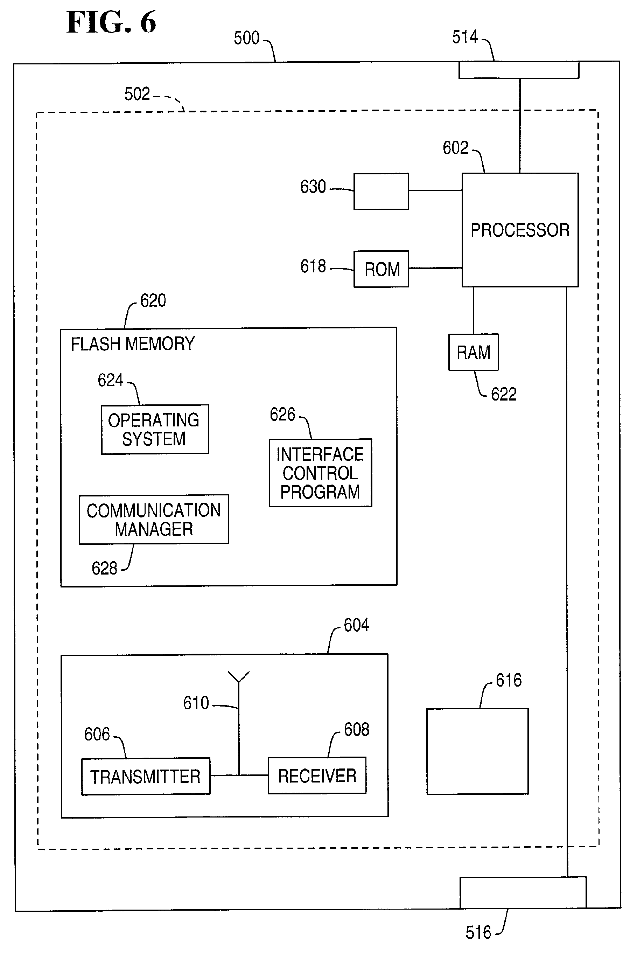

Fig. 6 illustrates additional details of the operator control unit 500 in accordance with the present invention. The control unit 500 includes a control unit processor 602, which may suitably be implemented as a standard CPU chip similar to those used in handheld or pocket computers, and a communications interface 604 for communicating with a transmitter interface such as the transmitter interface 226. The communications interface 604 includes a transmitter 606, receiver 608 and antenna 610. The communications interface 604 may suitably be built into and enclosed entirely within the control unit 500. Also illustrated here is the infrared port 514, which allows communication with an external computer such as the external computer 518. The infrared port 514 can be used to allow transferring of programs and data to the operator control unit 500 and to allow for transfer of data from the operator control unit 500 to the external computer. The control unit 500 also includes the external connection port 516, to allow an alternative method of connection between the external computer 518 and the control unit 500, also to allow for transfer of programs and data between the external computer and the control unit 500.

The control unit 500 includes various other electronic components, including a battery 616, and the LCD display screen 502. The display unit 500 further includes read-only memory 618 for permanent storage of instructions and other data, flash memory 620 for long term storage of programs, command lists, action logs and other similar data, and RAM 622 for short term storage of data used in the operation of the control unit 500.

An operating system 624 is stored in the flash memory 620. The operating system 624 manages storage of data and programs, and execution of programs by the control unit 500. The operating system 624 also manages transfer of programs and data to and from an external computer. When the control unit 500 is turned on, the operating system 624 monitors the infrared port 514 and the external port 516. When the external computer signals that a data transfer is to be made, it sends an appropriate signal to the control unit 500, causing the operating system 624 to initiate a data transfer. In coordination with the operating system 624, the external computer transfers programming or data to the control unit 500 or from the control unit 500, depending on operator instructions. The external computer may transfer updated communication programming to the control unit 500, or may transfer data such as an operating log. Similarly, the external computer may initiate a transfer of an updated operating log from the control unit 500 to the external computer using the infrared port 514 or the external port 516.

The control unit 500 also includes an interface control program 626 and a communication manager 628. The control program 626 formats and displays messages received from the transmitter interface 226, and also converts operator inputs into appropriate messages. The interface control program 626 transfers received messages from the communication manager 628 and transfers command messages to the communication manager 628. The communication manager 628 manages transmission of messages to and from the transmitter interface 226 using the communications interface 604.

When the control unit 500 is turned on, it receives a message from all available transports within range. The communication manager 628 receives an availability message from each available transport and passes the messages to the interface control program 626. The control program 626 displays a message notifying the operator of transport availability, the message including a list of all available transports in order to allow the operator to select the desired transport.

When the operator selects a transport, the control program 626 and the communication manager 628 interact to convey the selection to the appropriate transport and to manage messages between the operator and the transport as the operator furnishes identifying information to the transport and a session is established. Once a session is established, the selected transport transmits a message describing its current status. The control unit 500 receives the message using the communication manager 628 and displays the message to the operator using the interface control program 626.

During a session, the transport controller 224 sends each operator message both to the monitor 214 and the operator control unit 500. Details of the preparation and sending of messages are described above in connection with Fig. 4.

When the control unit 500 receives an operator message from the transmitter interface 226, the processor 602, under the control of the interface control program 626, displays the message using the LCD display 602. The processor 602 may also direct generation of an audible signal by an alerter 630. Preferably, a similar or identical message is also displayed using the monitor 214. The operator takes appropriate steps to respond to the message, such as clearing an error condition reported in the message, and then enters an appropriate command using the operator display unit 500. The operator display unit 500 sends the command to the transmitter interface 226, which passes the command to the transport controller 224. The transport controller 224 then directs the operation of the transport in response to the command. The operator may alternatively enter a command using the keyboard 212, in which case the command is received directly by the transport controller 224. When the operator issues a command using the keyboard 212, any responses displayed on the monitor 214 are also passed to the control unit 400 for display.

The operator may also use the control unit 500 to send a command to the transport whether or not an operator message has been received. For example, the operator may use the control unit 500 to issue a command for the transport to suspend operation. In such a case, the operator simply invokes an appropriate command interface, such as the command interface 508 illustrated in Fig. 5, and types a "Pause" command using the keyboard display 512. The control unit 500 then transmits the command using the communications interface 504. The command is received by the transmitter interface 226 and passed along to the transport controller 224. The transport controller 224 stops the operation of the transport and waits for a subsequent command to restart transport operation.

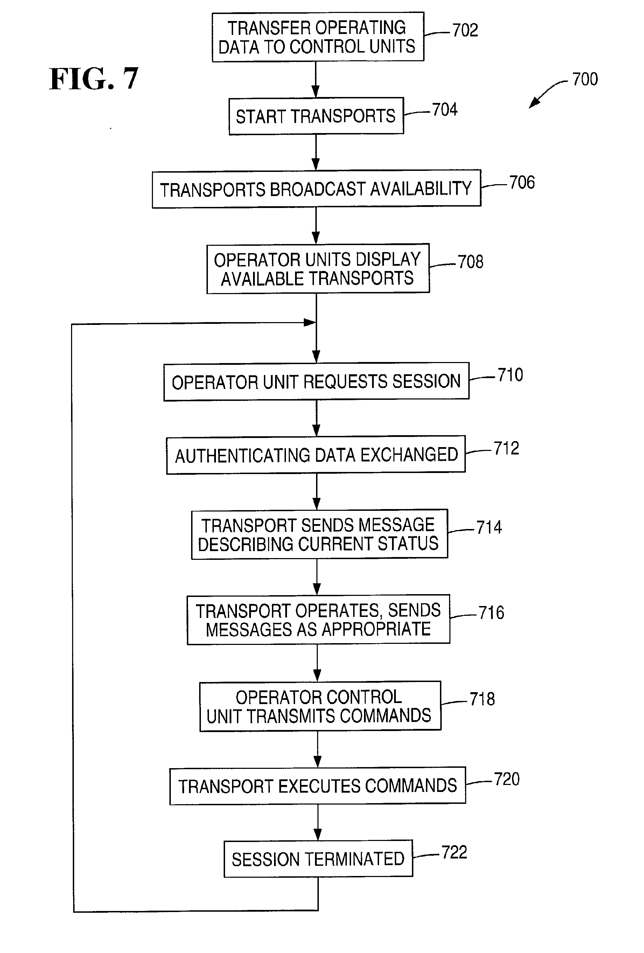

Fig. 7 illustrates a process 700 for control of a single item transport or a group of item transports in accordance with the present invention. At step 702, operating data is transferred to each of a plurality of operator control units. The operator control units may suitably be similar to the control unit 500 of Figs. 5 and 6. The operating data may include programs, operation logs, transport identifiers and other appropriate data. At step 704, operation of each of a plurality of item transports is initiated. The item transports may suitably be similar to the transport 202 of Fig. 2 or the transports 302A-302C of Fig. 3. The transports may suitably be operative to transmit and receive wireless messages, using either a transmitter interface dedicated to each transport or a shared transmitter interface controlled by a server, the server being suitably connected to the transports using a local area network. At step 706, each of the item transports broadcasts its availability. At step 708, each of the operator control units receives the broadcasts and displays a message listing the available transports. At step 710, in response to selection of a transport by an operator using an operator control unit, the operator control unit sends a session initiation request to the selected transport. At step 712, the transport and the operator control unit exchange authenticating data and establish a session, creating a session identifier to be used in messages transferred between the transport and the operator control unit during the session. The transport may stop broadcasting an availability message when it establishes a session with the operator control unit. Alternatively, the transport may broadcast an availability message while engaged in a session with a control unit if it is or becomes desirable for the transport to be available to engage in an additional session with a different control unit. At step 714, the transport sends a message to the control unit describing the current status of the transport. At step 716, the transport performs item processing operations, sending status messages as appropriate to a local monitor and to an operator control unit. Each status message is preferably created by first retrieving data from a message database associating each status condition with a specific status message and then adding the session identifier to the message and formatting the message for transmission.

At step 718, the operator control unit receives operator commands and transmits the commands to the item transport. At step 720, the item transport executes the operator commands and sends appropriate status messages to the operator control unit and the local monitor. At step 722, in response to a command by the operator to terminate the session, the control unit transmits a session termination request to the transport, the transport terminates the session. If the transport is not already engaged in a session with another transport or broadcasting an availability message, the transport resumes broadcasting an availability message. The operator control unit receives the availability broadcasts from all transports and displays available transports. Upon a command by an operator using the control unit to initiate a session, the process then returns to step 710.

While the present invention is disclosed in the context of a presently preferred embodiment, it will be recognized that a wide variety of implementations may be employed by persons of ordinary skill in the art consistent with the present invention.

## Claims

1. A document processing system, comprising:
a document transport;
a transport controller for directing the operation of the document transport, the transport controller being operative to sense exceptions and to generate operator messages in response to the exceptions;
a transmitter interface for receiving operator messages from the transport controller and wirelessly transmitting the messages; and
an operator control unit for wirelessly receiving operator messages from the transmitter interface and visually displaying the messages for an operator, the control unit being operative to receive operator commands and transmit the operator commands to the transport.

2. A system as claimed in claim 1 wherein the operator control unit is operative to receive a broadcast from the transport advising that the transport is available and to allow selection of the transport, the operator control unit being further operative to exchange authenticating information with the transport to establish a communication session with the transport.

3. A system as claimed in claim 2 wherein the transport creates a session identifier upon establishing a communication session with the operator control unit.

4. A system as claimed in claim 3 wherein the transport and the operator control unit include the session identifier in all messages exchanged during the communication session.

5. A system as claimed in claim 4 wherein the transport controller issues operator messages during operation of the transport and wherein all operator messages issued by the transport controller are directed both to a local display and the operator display unit.

6. A system as claimed in claim 5 wherein the transmitter interface transmits the messages using omnidirectional RF communication.

7. A system as claimed in claim 6 further comprising a plurality of additional transports and a plurality of additional operator control units operating within radio frequency of one another.

8. A system as claimed in claim 7 wherein each of the transport broadcasts an availability message when not engaged in a communication session with a control unit, the availability message including a unique identifier.

9. A system as claimed in claim 8 wherein each of the operator control units receives all availability messages when not engaged in a communication session with a transport and wherein each of the operator control units generates a display listing all available transports to allow the operator to select a desired transport with which to request a communication session.

10. A system as claimed in claim 9 wherein each of the transports broadcasts an availability message while engaged in a session with a control unit whenever the transport is available to engage in an additional session with a different control unit.

11. A system as claimed in claim 10 wherein each of the transports communicates with a transmitter server operative to control the transmitter interface and wherein the transmitter server processes all messages generated by each transport for transmission using the transmitter interface and directs messages received from each control unit to the correct transport.

12. A system as claimed in claim 11 wherein the transport controller communicates with the server over a local area network.

13. A method of document transport control comprising the steps of:
establishing a communication session between the transport and a handheld operator control unit;
transmitting status messages from the transport to the control unit; and
transmitting commands from the control unit to the transport.

14. A method as claimed in claim 13 wherein the step of establishing a communication session between the transport and a handheld operator control unit comprises:
broadcasting an availability message from the transport;
receiving the availability message at the control unit;
transmitting a session request from the control unit to the transport;
transferring authentication information between the transport and the control unit; and
creating a session identifier for use in communication during the session.

15. A method as claimed in claim 14 wherein a plurality of transports and control units operate in the vicinity of one another, each transport is operative to broadcast an availability message when not engaged in a communication session and each control unit is operative to receive the availability messages and to create a display listing all available transports to allow selection by an operator of a desired transport.

16. A method as claimed in claim 15 wherein the transports and operator control units are operative to communicate using omnidirectional RF communication.

17. A method as claimed in claim 16 wherein the transports share a transmitter interface and use a transmitter server to transmit messages to the transmitter interface for transmission to the control units and receive commands transmitted to the transmitter interface by the operator control units.
